# EUROPÄISCHE PATENTSCHRIFT

(11) **EP 0 610 238 B1**
(45) Veröffentlichungstag und Bekanntmachung des Hinweises auf die Patenterteilung: **10.01.1996**
(21) Anmeldenummer: 92919803.4
(22) Anmeldetag: 19.09.1992
(51) Int. Cl.: F16K 15/14, F16J 15/32

(54) **MANSCHETTENRÜCKSCHLAGVENTIL**
RING CHECK VALVE
SOUPAPE ANTI-RETOUR A MANCHETTE

(30) Priorität: 31.10.1991 DE 4135867
(43) Veröffentlichungstag der Anmeldung: 17.08.1994
(73) Patentinhaber: ITT Automotive Europe GmbH, D-60488 Frankfurt (DE)
(72) Erfinder: LACZNY, Horst, D-3170 Gifhorn (DE); GEBHARDT, Peter, D-6230 Frankfurt/Main 80 (DE); CEZANNE, Rudolf, D-6394 Graevenwiesbach 5 (DE); JAHN, Ralf, D-6236 Eschborn 1 (DE)
(86) Internationale Anmeldenummer: EP9202167
(87) Internationale Veröffentlichungsnummer: WO9309368

(56) Entgegenhaltungen:
- EP-A- 0 271 358
- FR-A- 1 298 488
- FR-A- 2 070 193
- GB-A- 551 152
- GB-A- 1 157 927
- US-A- 2 465 175
- US-A- 4 619 287

## Beschreibung

Der Erfindung liegt ein Manschettenrückschlagventil gemäß dem Oberbegriff des Hauptanspruchs zugrunde.

Ein solches Manschettenrückschlagventil ist aus der EP 0 271 358 A2 bekannt. Es liegt mit seiner Innen- wand für gewöhnlich dichtend in einer Ringnut eines Kolbens, den es mit seiner Dichtlippe gegen eine umgebende Bohrungs- wand abdichtet. Wird vom offenen Ende des V-Profils her Druck aufgebaut, drückt sich die Dichtlippe fester an die Bohrungswand. Erfolgt der Druckaufbau vom geschlossenen Ende des V-Profils, hebt die Dichtlippe sich der Bohrungswand ab, legt sich an die Innenwand des Manschettenrückschlagventils an und stellt in dieser Richtung einen Druckmitteldurchlaß her. Im Vergleich zu Kugelsitzrückschlagventilen stellt dies eine preiswerte, platzsparende Alternative dar. Es kommt jedoch vor, daß die Dichtlippe insbesondere bei Ausführungen mit sehr geringem Öffnungsdruck an der Innenwand kleben bleibt, vom Druck umklappt oder anderweitig dauerhaft verformt wird.

Die Aufgabe der vorliegenden Erfindung besteht daher darin, ein gattungsgemäßes Manschettenrückschlagventil zu schaffen, das dauerhaft und zuverlässig funktioniert.

Diese Aufgabe wird gelöst durch die Merkmale des kennzeichnenden Teils des Hauptanspruchs. Die radialen Stützwände ermöglichen weiterhin ein zumindest partielles Abheben der Dichtlippe von der Bohrungswand, verhindern jedoch ein Ankleben an der Innenwand und üben eine kleine, aber ausreichende Rückstellkraft auf die Dichtlippe aus. Auch ein Umklappen der Dichtlippe wird erfolgreich verhindert.

Als besonders vorteilhaft erweisen sich drei, am Umfang verteilte Stützwände. Ihre Abstände sind einerseits groß genug, um den Vordruck des Manschettenrückschlagventils klein zu halten. Andererseits sind sie klein genug, um über den gesamten Umfang stabilisierend zu wirken.

Gerade bei Druckminderventilen, die beispielsweise als Bremskraftregler arbeiten und in denen gattungsgemäße Manschettenrückschlagventile häufig verwendet werden, um bei Bremsbeendigung einen schnellen Abbau des Hinterradbremsdruckes zu gewährleisten, tragen erfindungsgemäße Manschettenrückschlagventile erheblich zur Erhöhung der Lebensdauer bei.

Eine genauere Erläuterung des Erfindungsgedankens erfolgt nun anhand der Beschreibung zweier Zeichnungen. Es zeigt:
- Fig. 1: : einen Ausschnitt aus einem Druckminderventil, in welches ein erfindungsgemäßes Manschettenrückschlagventil eingebaut ist,
- Fig. 2: : ein erfindungsgemäßes Manschettenrückschlagventil in Draufsicht.

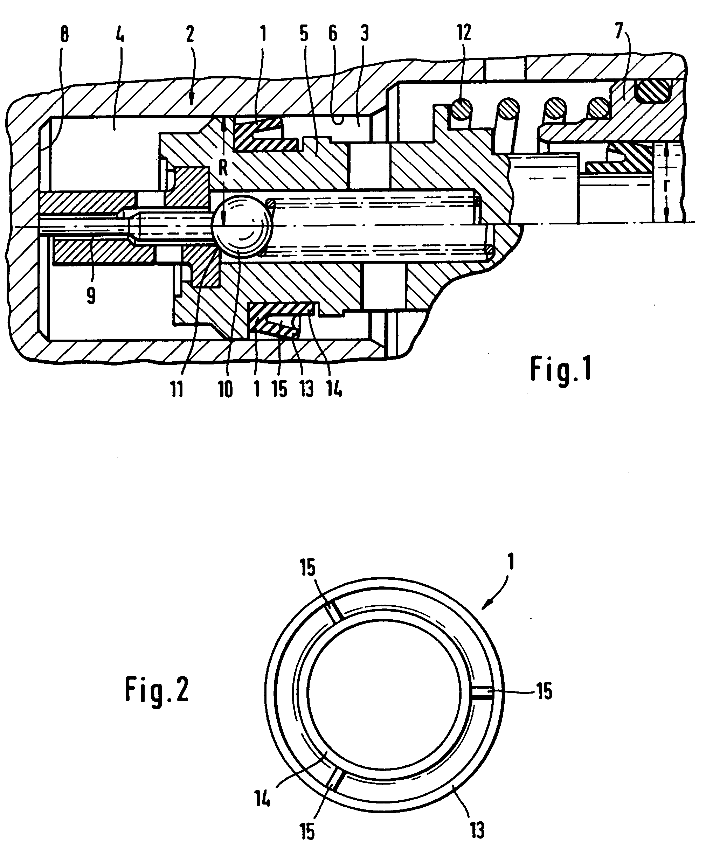

In Fig. 1 ist das Manschettenrückschlagventil 1 in das Druckminderventil 2 zwischen den Einlaßraum 3 und den Auslaßraum 4 eingebaut. Es umspannt in einer Ringnut den gestuften Regelkolben 5, wobei das offene Ende des Manschettenrückschlagventils 1 dem Einlaßraum 3 und das geschlossene Ende dem Auslaßraum 4 zugewandt ist. Der Regelkolben 5 ist in der Bohrung 6 geführt, wobei der große wirksame Regelkolbenradius R sich zwischen Einlaßund Auslaßraum 3 bzw. 4 befindet, während der kleine wirksame Regelkolbenradius r durch die ortsfeste Hülse 7 abgedichtet in einen druckmittelfreien Raum ragt.

Bei drucklosem Druckminderventil befindet sich der Regelkolben 5 in seiner Grundstellung in Anlage an der die Bohrung 6 begrenzenden Stirnwand 8, so daß der Stößel 9 das Ventilschließglied 10 vom Ventilsitz 11 abhebt, wie die obere Bildhälfte zeigt.

Steigt vom Einlaßraum 3 her der Druck an, setzt sich bei einem Umschaltdruck, der durch die Differenz der druckbeaufschlagten Flächen einerseits und die Federhärte der Druckfeder 12 andererseits bestimmt ist, der Regelkolben 5 gegen die Druckfeder 12 in Bewegung. Das Ventilschließglied 10 legt sich dichtend auf den Ventilsitz 11, wie in der unteren Bildhälfte dargestellt. Bei weiterem Druckanstieg im Einlaßraum 3 wird im Auslaßraum 4 der Druckanstieg proportional gemindert.

Wird im Einlaßraum 3 schließlich Druck abgebaut, stellt das Manschettenrückschlagventil 1 durch Abheben der Dichtlippe 13 von der Wand der Bohrung 6 einen zusätzlichen Druckmitteldurchlaß vom Auslaßraum 4 zum Einlaßraum 3 her. Das ist wichtig, weil der Regelkolben solange nicht in seine Grundposition zurückfahren kann, wie die Kraft der auslaßseitigen Druckbeaufschlagung die Kraft der Druckfeder 12 übersteigt. Der Druckmittelabfluß erfolgt also durch das Ventil 10/11, das bei dieser Regelkolbenposition als Rückschlagventil arbeitet, und das Manschettenrückschlagventil 1, so daß sich der Druck im Auslaßraum 4 schnell dem im Einlaßraum 3 angleicht und der Regelkolben sich wieder in seine Grundposition bewegt.

Das Manschettenrückschlagventil 1 selbst besitzt eine zylindrische, ständig flächig am Regelkolben 5 dichtend anliegende Innenwand 14.

An einem axialen Ende ist damit die Dichtlippe 13 verbunden die schräg nach außen absteht, so daß sich ein V-förmiges Profil ergibt. Dabei ragt am offenen Ende des V-Profils die zylindrische Innenwand 14 axial über die Dichtlippe 13 hinaus. In drucklosem Zustand schmiegt sich die Dichtlippe 13 an die sie umgebende Wand der Bohrung 6 an. Zwischen Innenwand 14 und Dichtlippe 13 sind gemäß Fig. 2 drei radiale Stützwände 15 am Umfang verteilt angeordnet. Sie erstrecken sich axial nicht weiter als die Dichtlippe 13.

In diesem Ausführungsbeispiel wurden folgende Abmessungen gewählt: Die Dicke der Innenwand 14 und der Dichtlippe 13 beträgt etwa 0,5 mm, während der Gesamtdurchmesser des Manschettenrückschlagventils 1 in der Größenordnung von 1 cm liegt. Die Stützwände 15 sind ungefähr 1 mm dick, also ungefähr doppelt so dick wie die Dichtlippe 13.

Durch diese Bemessung erhalten sie ausreichende Steifigkeit, um die Manschettenform zu stabilisieren und sind trotzdem weich genug, den Druckmitteldurchfluß nicht zu behindern. Das ganze Manschettenrückschlagventil 1 ist einteilig gefertigt.

### Bezugszeichenliste

- 1: Manschettenrückschlagventil
- 2: Druckminderventil
- 3: Einlaßraum
- 4: Auslaßraum
- 5: Regelkolben
- 6: Bohrung
- 7: Hülse
- 8: Stirnwand
- 9: Stößel
- 10: Ventilschließglied
- 11: Ventilsitz
- 12: Druckfeder
- 13: Dichtlippe
- 14: Innenwand
- 15: Stützwände

## Patentansprüche

1. Manschettenrückschlagventil (1) für druckmittelbetätigte Kolbenanordnungen, welches einstückig aus elastomerem Werkstoff gefertigt ist, mit einer zylindrischen Innenwand (14) und einer damit verbundenen umlaufenden Dichtlippe (13), welche zusammen ein V-förmiges Profil bilden, dadurch **gekennzeichnet**, daß zwischen Innenwand (14) und Dichtlippe (13) mehrere radiale Stützwände (15) aus gleichem Werkstoff in einem solchen Abstand zueinander angeordnet sind, daß sie ein zumindest partielles Abheben der Dichtlippe (13) in Richtung der Innenwand (14) unter einem Druckaufbau vom geschlossenen Ende des V-förmigen Profils her ermöglichen.

2. Manschettenrückschlagventil (1) nach Anspruch 1, dadurch **gekennzeichnet**, daß genau drei Stützwände (15) am Umfang verteilt vorhanden sind.

3. Manschettenrückschlagventil (1) nach Anspruch 1 oder 2, dadurch **gekennzeichnet**, daß die Stützwände (15) eineinhalb- bis dreimal so dick sind wie die Dichtlippe (13).

4. Manschettenrückschlagventil (1) nach einem der vorhergehen- den Ansprüche, dadurch **gekennzeichnet**, daß die zylindrische Innenwand (14) am offenen Ende des V-Profils über die Dichtlippe (13) und die Stützwände (15) hinausragt.

5. Verwendung eines Manschettenrückschlagventils (1) nach einem der vorhergehenden Ansprüche in einem Druckminderventil (2).

## Claims

1. A cup-seal non-return valve (1) for pressure-fluid-operated piston assemblies, which is manufactured in one piece of elastomeric material, including a cylindrical inner wall (14) and a circumferential sealing lip (13) connected to the inner wall, which form together a profile of V-type configuration,
**characterized** in that several radial supporting walls (15) made of the same material are arranged between the inner wall (14) and the sealing lip (13) spaced from each other such as to permit at least in part lifting of the sealing lip (13) in the direction of the inner wall (14) during pressure increase from the closed end of the V-shaped profile.

2. A cup-seal non-return valve (1) as claimed in claim 1,
**characterized** in that exactly three supporting walls (15) are arranged spread over the periphery.

3. A cup-seal non-return valve (1) as claimed in claim 1 or claim 2,
**characterized** in that the supporting walls (15) are one and a half to three times as thick as the sealing lip (13).

4. A cup-seal non-return valve (1) as claimed in any one of the preceding claims,
**characterized** in that the cylindrical inner wall (14), at the open end of the V-profile, projects beyond the sealing lip (13) and the supporting walls (15).

5. The use of a cup-seal non-return valve (1) as claimed in any one of the preceding claims in a pressure-reducing valve (2).

## Revendications

1. Valve antiretour à coupelle (1), pour dispositif à piston actionné au moyen d'un agent de pression, qui est réalisée d'une pièce en une matière élastomère et qui comprend une paroi intérieure cylindrique (14) et, reliée à cette paroi, une lèvre d'étanchéité (13) qui en fait le tour, cette paroi intérieure et cette lèvre d'étanchéité présentant ensemble une forme profilée en V, caractérisée en ce qu'entre la paroi intérieure (14) et la lèvre d'étanchéité (13), sont disposés plusieurs cloisons radiales d'appui (15) formées de la même matière et situées à une distance l'une de l'autre telle que, sous l'effet de l'établissement d'une pression du côté de l'extrémité fermée de la forme profilée en V, elles permettent un soulèvement au moins partiel de la lèvre d'étanchéité (13) en direction de la paroi intérieure (14).

2. Valve antiretour à coupelle (1) selon la revendication 1, caractérisée en ce qu'exactement trois cloisons d'appui (15) sont prévues d'une manière répartie suivant le contour.

3. Valve antiretour à coupelle (1) selon la revendication 1 ou 2, caractérisée en ce que les cloisons d'appui (15) sont une fois et demie à trois fois plus épaisses que la lèvre d'étanchéité (13).

4. Valve antiretour à coupelle (1) selon l'une des revendications précédentes, caractérisée en ce qu'à l'extrémité ouverte de la forme profilée en V, la paroi intérieure cylindrique (14) fait saillie au-delà de la lèvre d'étanchéité (13) et des cloisons d'appui (15).

5. Utilisation d'une valve antiretour à coupelle (1) selon l'une des revendications précédentes dans une valve de réduction de pression (2).
